Europäisches Patentamt

(19) European Patent Office

Office européen des brevets

(11) Numéro de publication: **0 004 509**
**B1**

(12) **FASCICULE DE BREVET EUROPEEN**

(45) Date de publication du fascicule de brevet: 01.07.81

(51) Int. Cl.³: **C 04 B 35/66, F 27 D 1/16, C 21 B 7/06**

(21) Numéro de dépôt: **79400180.0**

(22) Date de dépôt: **19.03.79**

(54) Compositions réfractaires utiles pour la production de pâtes injectables à faible teneur en eau.

(30) Priorité: **21.03.78 FR 7808143**

(43) Date de publication de la demande:
**03.10.79 Bulletin 79/20**

(45) Mention de la délivrance du brevet:
**01.07.81 Bulletin 81/26**

(84) Etats Contractants Désignés:
**BE CH DE FR GB IT LU NL SE**

(56) Documents cités:
**BE - A - 657 134**
**NL - C - 71 380**
**US - A - 3 202 732**

(73) Titulaire: **SOCIETE EUROPEENNE DES PRODUITS REFRACTAIRES**
**67, Boulevard du Château**
**F-92200 Neuilly-sur-Seine (FR)**

(72) Inventeur: **Kiehl, Jean-Pierre**
**15, rue de la Balme**
**69003 Lyon (FR)**
Inventeur: **Clavaud, Bernard Alain**
**Domaine du Nan Marguin**
**F-69780 Saint Pierre de Chandieu (FR)**

(74) Mandataire: **de Boisse, Louis**
**37, Avenue Franklin D. Roosevelt**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## 0 004 509

Compositions réfractaires utiles pour la production de pâtes injectables à faible teneur en eau

L'invention concerne des compositions refractaires utiles pour la production de pâtes injectables à très faible teneur en eau.

On fabrique couramment dans l'industrie des produits réfractaires des pâtes destinées à être injectées dans différents appareils sidérurgiques, pétrochimiques ou autres, chaque fois qu'un point chaud apparaît sur une tôlerie de four. Ces points chauds peuvent avoir pour origine la destruction partielle de la maçonnerie réfractaire ou tout simplement l'ouverture d'un ou de quelques joints donnant ainsi naissance à un passage de gas chauds.

Cette pratique d'injection est courante entre autres sur les hauts-fourneaux, les cowpers, les conduites de vent chaud, les fours primaires ou secondaires de pétrochimie, les lignes de transfert, etc...

Jusqu'à présent, les pâtes réfractaires injectées étaient des mélanges d'argiles et de chamotte parfois enrichies d'une quantité variable de ciments réfractaires. Pour obtenir des pâtes correctement injectables, c'est-à-dire capables de couler dans les fissures ou les agglomérats de garnissage, on était obligé de les mouiller pratiquement toujours à plus de 15% d'eau et, dans la plupart des cas, à plus de 25%, voire à plus de 30% d'eau. Ces teneurs donnent des masses réfractaires, durcies et cuites, ayant des porosités supérieures à 30% et atteignant parfois 40%.

Ces pâtes réfractaires ont donc deux défauts importants:

—la grande quantité d'eau nécessaire donne après séchage, et éventuellement prise, des produits poreux et peu résistants mécaniquement;

—le départ brutal de ces importantes quantités d'eau projetée dans une maçonnerie chaude a tendance, par ailleurs, à créer dans les pâtes injectées de véritables canaux qui sont autant d'amorces de fissures pour de nouvelles fuites ou passages de gaz chauds.

Pour pallier cet inconvénient, on était souvent obligé, après un premier colmatage par injection, de refaire une deuxième, voire une troisième injection pour boucher progressivement les canaux naissant dans les pâtes injectées.

La présente invention vise à fournir des compositions réfractaires ne nécessitant pour l'obtention de pâtes injectables, même sous de faibles pressions, qu'une proportion d'eau réduite, en tout cas inférieure à 10% en poids, de préférence comprise entre 4 et 8% en poids, ces pâtes injectables subissant un retrait total dû au séchage et à la prise céramique inférieur à 2%, de préférence inférieure à 1%.

Les compositions de l'invention comprennent quatre constituants essentiels:

(1) 30 à 60% en poids d'une fraction grossière constituée de grains dont au moins 50% sont supérieurs à 0,5 mm, les plus gros grains ne dépassant pas 10 mm, de préférence 6 mm;

(2) 10 à 30% en poids d'une fraction fine constituée de particules dont au moins 50% sont inférieures à 75 $\mu$m, les plus petites particules pouvant être de 10 $\mu$m;

(3) 10 à 30% en poids d'une fraction très fine constituée de particules dont au moins 50% sont inférieures à 5 $\mu$m, les plus fines particules pouvant être de 0,1 $\mu$m;

les fractions (1) à (3) étant formées de matières minérales d'origine naturelle ou synthétique, inertes vis-à-vis de l'eau; et

(4) 10 à 30% en poids d'une fraction ultra-fine constituée de particules dont au moins 80% sont inférieures à 0,1 $\mu$m, les plus fines particules pouvant être de 0,01 $\mu$m;

la fraction ultra-fine (4) étant inerte vis-à-vis de l'eau et constituée d'une matière choisie parmi la silice, l'oxyde de chrome, le bioxyde de titane, l'oxyde de zirconium, les carbures de silicium, les nitrures de silicium et les oxynitrures de silicium.

De préférence, le constituant (1) est présent à raison de 40 à 50% en poids et les constituants (2), (3) et (4) sont présents chacun à raison de 15 à 25% en poids.

La nature des matières minérales formant les fractions (1) (2) et (3) n'est pas critique, il suffit que ces matières soient inertes vis-à-vis de l'eau. Les fractions (1), (2) et (3) peuvent être constituées de matières identiques ou différentes. A titre d'exemples non limitatifs, les fractions (1), (2) et (3) peuvent être constituées de matières choisies, indépendamment, parmi la chamotte d'argile, (c'est-à-dire de l'argile cuite), la gibbsite, la quartzite, l'alumine (corindon), la magnésie, la chromite, le graphite, les "sialons" (matières céramiques constituées de solutions solides d'$Al_2O_3$ dans du nitrure de silicium $Si_3H_4$), des silicates, le sable, les matériaux réfractaires à base d'un plusieurs oxydes de métaux, des métaux en poudre, les carbures les nitrures et oxynitrures de silicium, etc...

Le choix de la ou des matières particulières à utiliser pour constituer les fractions (1), (2) et (3) sera fonction de la température et du milieu auxquels sera soumise en service la pâte injectée, ainsi que, bien entendu, de considérations économiques. A l'heure actuelle, on préfère la chamotte d'argile lorsque les températures rencontrées en service n'excèdent guère 1000°C environ et l'alumine pour les températures plus élevées (jusqu'à 1500°C environ).

Les fractions (1), (2) et (3) peuvent être facilement obtenues par broyage mécanique des matières choisies et tamisage approprié.

La fraction ultra-fine (4), formée principalement de particules inférieures à 0,1 $\mu$m peut être constituée, par exemple, de silice, d'oxyde de chrome, d'oxyde de titane, d'oxyde de zirconium, de carbures de silicium, de nitrures et d'oxynitrures de silicium etc...

L'alumine ne peut pas être utilisée pour constituer la fraction (4) car il n'est pas possible de préparer des particules ultra-fines d'alumine qui soient inertes vis-à-vis de l'eau.

La fraction ultra-fine (4) ne peut généralement pas être obtenue par broyage mécanique de la matière choisie. Les poudres ulta-fines utilisables peuvent être obtenues notamment par des techniques connues de dissociation ou d'hydrolyse de certains composés métalliques (tels que des halogénures) en phase vapeur, de condensation, à partir de la phase vapeur ou de précipitation à partir de solutions dans le cas des oxydes tels que la silice, l'oxyde de chrome, l'oxyde de titane et l'oxyde de zirconium. De la silice vitreuse ultra-fine est aussi obtenue comme sous-produit dans certains procédés industriels comme lors de la réduction du silicate de zirconium en zircone ou lors de la production de ferro-silicium (les poussières des fours électriques contiennent de la silice appropriée). Des poudres ultra-fines de carbures, de nitrures ou d'oxynitrures de silicium peuvent être obtenues par pulvérisation au chalymeau à plasma.

Des poudres ultra-fines convenant comme constituant (4) sont disponibles dans le commerce ou peuvent être rendues appropriées à l'emploi dans les compositions de l'invention par une calcination modérée destinée à les rendre inertes vis-à-vis de l'eau.

Les constituants (1) à (4) doivent être inertes vis-à-vis de l'eau afin de ne former aucun colloïde qui, en gonflant, retiendrait inutilement de l'eau.

Pour obtenir des pâtes injectables, les compositions de l'invention son mélangées avec une quantité d'eau inférieure à 10% en poids, de préférence comprise entre 4 et 8% en poids, jusqu'à obtention d'une pâte homogène qui coule par gravité. Ces pâtes peuvent être véhiculées par toutes sortes de pompes pour fluides visqueux, telles que les pompes à piston, les pompes à axes décentrés, etc...

Afin de faciliter le mouillage de la composition par l'eau, on peut avantageusement ajouter à l'eau une petite quantité (par exemple quelques dixièmes de pourcent) d'agents dispersants organiques ou minéraux, tels que des phosphates de métaux alcalins comme le tripolyphosphate de sodium.

Les pâtes résultantes durcissent par prise céramique (frittage) dès 800 à 1000°C. La prise peut être accélérée, si on le désire, par addition à la composition de quelques pourcents de silicate alcalin, d'acide phosphorique ou de ciments hydrauliques.

La propriété des compositions de l'invention de pouvoir former des pâtes injectables donnant, après injection et cuisson, des produits à faible retrait (moins de 2% et de préférence moins de 1%), semble être due au fait que l'on obtient un très bon remplissage des cavités existant entre les particules d'une fraction donnée par les particules de la fraction inférieure de sorte que la porosité des produits cuits est toujours inférieure à 25% et de préférence au voisinage de 20%. Egalement, les particules ultra-fines semblent jouer le rôle de minuscules "roulements à billes" qui permettent d'obtenir des pâtes d'une coulabilité excellente malgré le peu d'eau présente et autorisent leur injection sous des pressions relativement faibles.

Les exemples non limitatifs suivants illustrent l'invention.

## EXEMPLE 1

*Pâte injectable à base de chamotte d'argile:*

Composition en poids...
48% de chamotte d'argile à 42% d'$Al_2O_3$ passant au tamis de 2 mm

20% de chamotte d'argile à 42% d'$Al_2O_3$ d'une grosseur de particules à 50% inférieure à 75 $\mu$m

16% d'$Al_2O_3$ calcinée d'une grosseur de particules inférieure à 5 $\mu$m

12% de silice condensée d'une grosseur de particules inférieure à 0,1 $\mu$m

4% de ciment "Sécar 250" (vendu par la Société dite "Ciments Lafarge), dont la composition chimique, en poids, est la suivante: alumine 72%, chaux 27%, silice 0,25%, oxyde de fer 0,15%; perte au feu 0,35%

100%

La silice condensée de grosseur inférieure à 0,1 $\mu$m provient de la récupération dans les manches d'aspiration des fours électriques de fabrication du ferro-silicium.

Quantité d'eau ajoutée pour la préparation d'une pâte injectable sous 20 bars ............... 7% en poids.

Propriétés physiques après injection et cuisson:

— à 150°C : densité apparente : 2,15 g/cm³

— à 1000°C : densité apparente : 2,15 g/cm³
porosité ouverte : 22%
résistance à la compression : 39 MPa 400 kg/cm²
retrait : < 0,2%

## EXEMPLE 2

*Pâte injectable à base de quartzite:*

Composition en poids...
48% de quartzite passant au tamis de 2 mm

20% de quartzite d'une grosseur de particules à 50% inférieure à 75 $\mu$m

16% de sable rebroyé d'une grosseur de particules inférieure à 5 $\mu$m

12% de silice condensée d'une grosseur de particules inférieure à 0,1 $\mu$m

4% de $H_3PO_4$

100%

Quantité d'eau ajoutée pour la préparation d'une pâte injectables sous 20 bars ... 6,5% en poids
Propriétés physiques après injection et cuisson:

— à 150°C   : densité apparente  :  2,06 g/cm³
— à 1000°C : densité apparente  :  2,04 g/cm³
              porosité ouverte : 20,08%
              résistance à la compression : 30 MPa 300 kg/cm²
              retrait : < 0,2:

EXEMPLE 3

*Pâte injectable à base d'alumine (corindon) et d'oxyde de chrome* $Cr_2O_3$:
              Composition en poids:  44%  d'$Al_2O_3$ électrofondue passant
                                          au tamis de 1,5 mm

                                     18%  d'$Al_2O_3$ électrofondue d'une
                                          grosseur de particules à 50%
                                          inférieure à 75 $\mu$m

                                     16%  d'$Al_2O_3$ calcinée d'une gros-
                                          seur de particules inférieure
                                          à 5 $\mu$m

                                     18%  d'oxyde de chrome d'une gros-
                                          seur de particules inférieure
                                          à 0,1 $\mu$m

                                      4%  de $H_3PO_4$
                                    ─────
                                    100%

L'oxyde de chrome de grosseur inférieure à 0,1 $\mu$m est obtenu par précipitation à partir d'une
solution et calcination à 700°C.
              Quantité d'eau ajoutée pour la préparation d'une pâte injectable sous 20 bars ............ 4,6% en
poids

Propriétés physiques après injection et cuisson:

— à 150°C   : densité apparente  :  2,85 g/cm³
— à 1000°C : densité apparente  :  2,89 g/cm³
              Porosité ouverte : 20,1%
              Résistance à la compression : 59 MPa (600 kg/cm²)
              Retrait : < 0,2%

EXEMPLE 4

*Pâte injectable à base de SiC:*
              Composition en poids:  48%  de SiC hexagonal passant
                                          au tamis de 3 mm

                                     18%  de SiC hexagonal d'une gros-
                                          seur de particules à 50%
                                          inférieure à 75 $\mu$m

                                     18%  de SiC cubique d'une gros-
                                          seur de particules inférieure
                                          à 5 $\mu$m

                                     12%  de SiC cubique d'une gros-
                                          seur de particules inférieure
                                          à 0,08 $\mu$m

                                      4%  de $H_3PO_4$
                                    ─────
                                    100%

5

0 004 509

Le SiC cubique d'une grosseur inférieure à 0,08 μm est obtenu par pulvérisation au chalumeau à plasma.

Quantité d'eau ajoutée pour la préparation d'une pâte injectable sous 20 bars ............ 4,8% en poids

Propriétés physiques après injection et cuisson:
— à 150°C   : densité apparente  :  2,3 g/cm³
— à 1000°C  : densité apparente  :  2,3 g/cm³
              Porosité ouverte: 21%
              Résistance à la compression 25 MPa (250 kg/cm²)
              Retrait : < 0,2%

## Revendications

1. Compositions réfractaires utiles pour la préparation de pâtes injectables, caractérisées en ce qu'elles comprennent les constituants essentiels suivants:
(1) 30 à 60% en poids d'une fraction grossière constituée de grains dont plus de 50% sont supérieurs à 0,5 mm, les plus gros grains ne dépassant pas 10 mm, de préférence 6 mm;
(2) 10 à 30% en poids d'une fraction fine constituée de particules dont au moins 50% sont inférieures à 75 μm, les plus petites particules pouvant être de 10 μm;
(3) 10 à 30% en poids d'une fraction très fine constituée de particules dont au moins 50% sont inférieures à 5 μm, les plus fines particules pouvant être de 0,1 μm;
les fractions (1) à (3) étant formées de matières minérales d'origine naturelle ou synthétique, inertes vis-à-vis de l'eau; et
(4) 10 à 30% en poids d'une fraction ultra-fine constituée de particules dont au moins 80% sont inférieures à 0,1 μm, les plus fines particules pouvant être de 0,01 μm,
la fraction ultra-fine (4) étant inerte vis-à-vis de l'eau et constituée d'une matière choisie parmi la silice, l'oxyde de chrome, le bioxyde de titane, l'oxyde de zirconium, les carbures de silicium, les nitrures de silicium et les oxynitrures de silicium.

2. Compositions selon la revendication 1, caractérisée en ce que le constituant (1) est présent à raison de 40 à 50% en poids et les constituants (2), (3) et (4) sont présents chacun à raison de 15 à 25% en poids.

3. Compositions selon la revendication 1 ou 2, caractérisées en ce que les fractions (1), (2) et (3) sont constituées de matières identiques ou différentes choisies indépendamment, parmi la chamotte d'argile, la gibbsite, la quartzite, l'alumine, la magnésie, la chromite, le graphite, les carbures, les nitrures et oxynitrures de silicium, les "Sialons," des silicates, le sable, les matériaux réfractaires à base d'une ou plusieurs oxydes de métaux, et des métaux en poudre.

4. Compositions selon la revendication 3, caractérisées en ce qu'au moins une des fractions (1), (2) et (3) est formée de chamotte d'argile ou d'alumine.

5. Compositions selon l'une quelconque des revendications 1 à 4, caractérisées en ce qu'elles contiennent, en outre, une petite quantité de silicate alcalin, d'acide phosphorique ou de ciment hydraulique.

6. Pâtes injectables caractérisées en ce qu'elles sont constituées d'une composition selon l'une quelconque des revendications 1 à 5, mélangées avec une petite quantité d'eau inférieure à 10% en poids, et en ce qu'elles présentent un retrait total, après séchage et prise céramique, inférieur à 2%, et donnent des masses réfractaires cuites d'une porosité inférieure à 25%.

7. Pâtes selon la revendication 6, caractérisées en ce que la quantité d'eau mélangée est comprise entre 4 et 8% en poids.

8. Pâtes selon la revendication 6 ou 7, caractérisées en ce que l'eau mélangée contient une petite quantité d'un agent dispersant.

9. Pâtes selon la revendication 6, caractérisées en ce qu'elles présentent un retrait total, après séchage et prise céramique, inférieur à 1%.

## Claims

1. Refractory compositions suitable for preparing injectable pastes, characterized in that it comprises the following essential constituents:
(1) 30 to 60% by weight of a coarse fraction comprised of grains at least 50% of which are greater than 0.5 mm, the greatest gains being not greater than 10 mm;
(2) 10 to 30% by weight of a fine fraction comprised of particles at least 50% of which are smaller than 75 μm, the finest particles being not smaller than 10 μm;
(3) 10 to 30% by weight of a very fine fraction comprised of particles at least 50% of which are smaller than 5 μm, the finest particles being not smaller than 0.1 μm;
said fractions (1) to (3) being comprised of natural or synthetic inorganic materials which are inert to water; and

6

(4) 10 to 30% by weight of an ultra fine fraction comprised of particles at least 80% of which are smaller than 0.1 $\mu$m, the finest particles being not smaller than 0.01 $\mu$m, said ultra fine fraction (4) being inert to water and comprised of a material selected among silica, chromium oxide, titanium dioxide, zirconia, silicon carbides, silicon nitrides and silicon oxinitrides.

2. Compositions as claimed in claim 1, characterized in that the constituent (1) is present in an amount of 40 to 50% by weight, and the constituents (2), (3) and (4) are each present in an amount of 15 to 25% by weight.

3. Compositions as claimed in claim 1, or 2, characterized in that the fractions (1), (2) and (3) are comprised of identical or different materials independently selected among clay chamotte, gibbsite, quartzite, alumina, magnesia, chromite, graphite, silicon carbides, silicon nitrides, silicon oxinitrides, sialons, silicates, sand, refractory materials based on one or more metal oxide(s), and powdered metals.

4. Compositions as claimed in claim 3, characterized in that at least one of the fractions (1), (2) and (3) is comprised of clay chamotte or alumina.

5. Compositions as claimed in any of claims 1 to 4, characterized in that they further comprise a small amount of alkaline silicate, phosphoric acid or hydraulic cement.

6. Injectable pastes, characterized in that they comprised of a refractory composition as claimed in any of claims 1 to 5, mixed with less than 10% by weight of water, and in that they exhibit, after drying and ceramic setting, a total shrinkage lower than 2%, and give fired refractory masses having a porosity lower than 25%.

7. Pastes as claimed in claim 6, characterized in that the amount of mixed water is comprised between 4 and 8% by weight.

8. Pastes as claimed in claim 6 or 7, characterized in that the mixed water contains a small amount of a dispersing agent.

9. Pastes as claimed in claim 6, characterized in that they exhibit, after drying and ceramic setting, a total shrinkage lower than 1%.

## Patentansprüche

1. Hochschmelzende Mischung für die Herstellung einspritzbarer Massen, dadurch gekennzeichnet, daß diese folgende wesentliche Bestandteile enthalten:
(1) 30 — 60 Gew.% eines grobkörnigen Bruches, bestehend aus Körnern, von denen wenigstens 50% größer als 0,5 mm sind und die größten Körner 10 mm, vorteilhaft 6 mm nicht überschreiten;
(2) 10 — 30 Gew.% eines feinen Bruches, bestehend aus Partikeln, von denen wenigstens 50% kleiner als 75 $\mu$m sind und von denen die kleinsten 10 $\mu$m betragen können;
(3) 10 — 30 Gew.% eines sehr feinen Bruches, bestehend aus Partikeln, von denen wenigstens 50% kleiner als 5 $\mu$m sind und von denen die kleinsten Partikel 0,1 $\mu$m betragen können;
die Brüche (1) bis (3) bestehen aus mineralischen Materialien natürlichen oder synthetischen Ürsprungs, die inert gegenüber Wasser sind; und
(4) 10 — 30 Gew.% eines ultrafeinen Bruches, bestehend aus Partikeln, von denen wenigstens 80% kleiner als 0,1 $\mu$m sind und von denen die feinsten Partikel 0,01 $\mu$m aufweisen können,
der ultrafeine Bruch (4) ist inert gegenüber Wasser und besteht aus Materialien wie Siliciumoxid, Chromoxid, Titanoxid, Zirkoniumoxid, Siliciumkarbid, Siliciumnitrid und -oxinitrid.

2. Mischung nach Anspruch 1, dadurch gekennzeichnet, daß der Bestandteil (1) im Verhältnis von 40 — 50 Gew.% und die Bestandteile (2), (3) und (4) jeder im Verhältnis von 15 — 20 Gew.% enthalten sind.

3. Mischung nach Anspruch 1 oder 2, dadurch gekennzeichnet, daß die Bestandteile (1), (2) und (3) aus identischen oder unterschiedlichen Materialien bestehen können, die unabhängig gewählt werden können unter Tonschamotte, Gibbite, Quarzite, Aluminiumoxide, Magnesiumoxide, Chromite, Graphite, Karbide, Siliciumnitride und -oxinitride, "Sialons," Silikaten, Sand, hochschmelzende Materialien auf der Grundlage von einem oder mehreren Metalloxiden und Metallpulvern.

4. Mischung nach Anspruch 3, dadurch gekennzeichnet, daß wenigstens einer der Bestandteile (1), (2) und (3) aus Tonschamotten oder Aluminiumoxid besteht.

5. Mischung nach einem der Ansprüche 1 bis 4, dadurch gekennzeichnet, daß diese des weiteren eine geringe Menge alkalischen Silikats, Phosphorsäure oder hydraulischen Zement enthalten.

6. Einspritzbare Mischung, dadurch gekennzeichnet, daß diese aus einem der Bestandteile gemäß den Ansprüchen 1 bis 5 besteht, daß dieser Mischung eine geringe Menge Wasser von weniger als 10 Gew.% zugesetzt ist und daß diese eine Gesamtschwindung nach dem Trocknen und der Keramisierung von weniger als 2% aufweist und den gebrannten keramischen Massen eine Porosität von weniger als 25% gibt.

7. Mischung nach Anspruch 6, dadurch gekennzeichnet, daß die Menge des zugesetzten Wassers zwischen 4 — 8 Gew.% liegt.

8. Mischung nach Anspruch 6 oder 7, dadurch gekennzeichnet, daß das zugesetzte Wasser eine geringe Menge eines Dispersionsmittels enthält.

9. Mischung nach Anspruch 6, dadurch gekennzeichnet, daß diese nach dem Trocknen und der Keramisierung eine Gesamtschwindung von weniger als 1% aufweist.